# EUROPÄISCHE PATENTSCHRIFT

(11) **EP 1 021 704 B1**
(45) Veröffentlichungstag und Bekanntmachung des Hinweises auf die Patenterteilung: **05.07.2006**
(21) Anmeldenummer: 98967119.3
(22) Anmeldetag: 27.02.1998
(51) Int. Cl.: G01N 25/68

(54) **VERFAHREN ZUR DETEKTION VON KONDENSATIONEN AN OBERFLÄCHEN**
PROCESS FOR DETECTING CONDENSATIONS ON SURFACES
METHODE POUR LA DETECTION DE CONDENSATION SUR DES SURFACES

(30) Priorität: 28.02.1997 DE 19708053
(43) Veröffentlichungstag der Anmeldung: 26.07.2000
(60) Teilanmeldung: 06001820.7
(73) Patentinhaber: UST Umweltsensortechnik GmbH, 98716 Geschwenda (DE)
(72) Erfinder: Kiesewetter, Olaf, 98716 Geschwenda (DE); Altstadt, Erhard, 98693 Ilmenau (DE); Hansch, Horst, 98693 Ilmenau (DE); Reinholz, Albert, 98704 Wümbach (DE)
(74) Vertreter: Liedtke, Klaus
(86) Internationale Anmeldenummer: PCT/DE1998/000573
(87) Internationale Veröffentlichungsnummer: WO 1998/038499

(56) Entgegenhaltungen:
- EP-A- 0 094 266
- EP-A- 0 178 071
- EP-A- 0 262 342
- EP-A- 0 713 065
- DE-A- 3 231 534
- PATENT ABSTRACTS OF JAPAN vol. 012, no. 029 (P-660), 28.Januar 1988 & JP 62 182643 A (TOYOTA MOTOR CORP), 11.August 1987,

## Beschreibung

Die Erfindung betrifft ein Verfahren zur Detektion von Kondensationen an Oberflächen mit einem Streufeldkondensator, der auf einer Trägerschicht angeordnet ist.

Im Stand der Technik sind mehrere Verfahren bekannt, mit denen die Betauung an Oberflächen festgestellt werden kann. Hierzu können unterschiedliche physikalische und chemische Effekte angewendet werden. Beispielsweise werden mit Hilfe von Spiegeltaupunktmeßgeräten die Reflexionsveränderungen an der Oberfläche des Spiegels bei der Betauung mit Hilfe mit optischen Auswertemethoden genutzt.
Ferner sind Anordnungen bekannt, bei denen die Leitfähigkeitsänderungen an Elektrodenstrukturen als Meßeffekt ausgewertet wird.

Es sind weiterhin Verfahren bekannt, bei denen die Änderung der relativen Dielektrizitätskonstante im Streufeld eines Kondensators bei der Betauung des Umfeldes ausgewertet wird. Die zur Anwendung dieser Verfahren verwendeten Anordnungen haben den Vorteil, daß sie einfach in unterschiedlichen Ausführungen gestaltet werden können, in kleinen Anordnungen herstellbar sind und eine einfache Signalgewinnung und -auswertung ermöglichen.

Nachteilig ist dabei jedoch, daß Verschmutzungen an der Oberfläche der Meßanordnung zu Meßfehlern führen. Ferner können Meßfehler dadurch auftreten, daß ein Verzug bei der Betauung auftritt.

Der Erfindung liegt die Aufgabe zugrunde, ein Verfahren zur Detektion von Kondensationen an Oberflächen anzugeben, die sich durch einfache Gestaltungsweise und einfache Signalauswertung auszeichnet und bei der bereits vor Erreichen des Taupunktes ein auswertbares Signal erzeugt wird.

Erfindungsgemäß gelingt die Lösung der Aufgabe durch ein Verfahren gemäß Anspruch 1.

Die erfindungsgemäß verwendete Anordnung entsteht dadurch, daß auf der Trägerschicht eine Metallschicht als Interdigitalstruktur angebracht ist, die einen Kondensator bildet, in dem Kondensator ein temperaturabhängiger Widerstand integriert ist, der gleichzeitig als Temperatursensor und als Heizelement verwendet wird und auf der Metallschicht außer einer Passivierungsschicht eine die Betauung fördernde Zusatzschicht angebracht ist.

Eine vorteilhafte Ausgestaltung des erfindungsgemäßen Verfahrens ist in dem abhängigen Anspruch angegeben.

Die erfindungsgemäße Verwendung einer Sensoranordnung ermöglicht es, die Temperatur am Kondensator zu messen und den Temperatursensor gleichzeitig als Heizelement zu nutzen, um die Betauung zu beseitigen. Mit der erfindungsgemäßen Anordnung, die in Form einer Sandwichstruktur ausgebildet ist, wird es möglich, bereits einige Kelvin vor Erreichen des Taupunktes einen detektiebaren Wasserfilm auf der Anordnung zu erzeugen. Durch die Integration des temperaturabhängigen. Widerstandes in einem Steufeldkondensator wird die Temperatur unmittelbar an der zu betauenden Schicht gemessen und dadurch eine hohe Genauigkeit gewährleistet.
Ein weiterer wichtiger Vorteil ergibt sich dadurch, daß der Sensor auf flexiblem Material angeordnet werden kann und dadurch vielfältige Einsatzmöglichkeiten gewährleistet werden können.

Auf der strukturierten metallischen Schicht können in einfacher Weise Bereiche für die Anschlußstellen ausgebildet werden, die als Bondinseln dienen und mit Anschlußdrähten kontaktiert werden können,

Die Erfindung wird im folgenden anhand eines Ausfuhrungsbeispieles näher erläutert In der zugehörigen Zeichnung zeigen:
Figur 1 das Ersatzschlaltbild der erfindungsgemäß verwendeten Sensoranordnung,
Figur 2 die Anordnung der Leiterstukturen auf der Trägerschicht,
Figure 3 den Schichtaufbau einer sensoranordnung mit Passivierungsschicht und Kondensationskeimen und
Figur 4 den Schichtaufbau der Sensoranordnung.

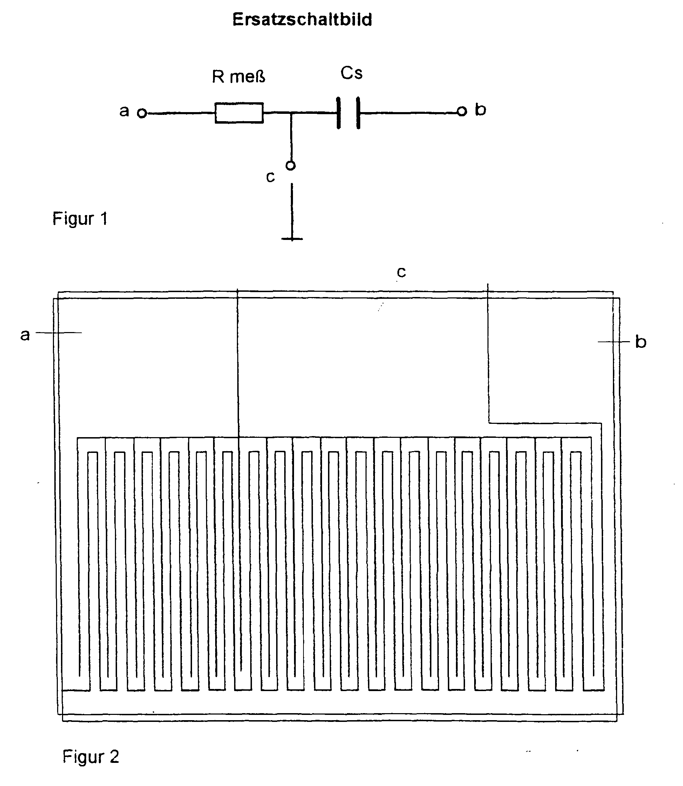

Das in Figur 1 dargestellt Ersatzschaltbild erläutert die Funktionsweise der erfindungsgemäss verwendete Sensoranordnung. Dabei sind der Meßwiderstand R_{meß} und der Streufeldkondensator Cₛ in Reihe angeordnet und mit den elektrischen Anschlüssen a und b versehen. Der Meßwiderstand R_{meB} ist über die Anschlüsse a und c angeschlossen. Über diese Anschlußstellen kann das Sensorsignal abgegriffen und gleichzeitig die elektrische Leistung zum Beheizen der Sensoranordnung eingespeist werden.

In Figur 2 ist die Digitalstruktur der Sensoranordnung auf der Trägerschicht dargestellt. Bei dieser Anordnung ergeben sich im oberen Bereich die drei Anschlußflächen für die Anschlüsse a, b und c, die dabei in Form von Bondinseln gestaltet sind, so daß der Anschluß von Anschlußdrähten hier in einfacher Weise möglich wird. Die eingearbeiteten Strukturen sind so gestaltet, daß die Widerstandsanordnung, die zwischen den Anschlüssen a und c und die Kondensatoranordnung, die zwischen den Anschlüssen b und c gebildet werden, in Form einer Interdigitalstruktur ineinandergreifen, so daß die unmittelbar benachbarte Anordnung dieser beiden elektrischen Elemente gewährleistet ist.

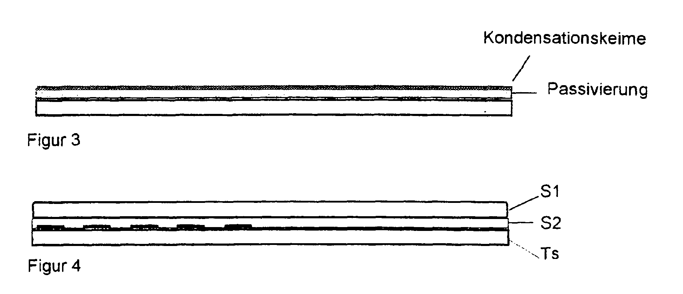

Figur 3 erläutert den Schichtaufbau der Anordnung mit einer Passivierungsschicht und Kondensationskeimen.

Bei der in Figur 4 dargestellten Sensoranordnung ist auf der Trägerschicht T_{S} die elektrische Struktur aufgebracht und darüber die aus zwei Teilschichten bestehende Passivierungsschicht angeordnet. Diese Passivierungsschicht besteht aus der unteren hydrophoben Schicht S₂, und der darüber angeordneten hydrophilen Schicht S₁.

### BEZUGSZEICHENLISTE

- C_{S}: Streufeldkondensator
- R_{meß}: Meßwiderstand
- T_{S}: Trägerschicht
- S₁: obere Schutzschicht
- S₂: untere Schutzschicht
- a,b,c: Anschlußstellen

## Patentansprüche

1. Verfahren zur Detektion von Kondensationen an Oberflächen durch Auswertung der Änderung der Dielektrizitätskonstante im Streufeld eines Kondensators (C_{S}), wobei am Kondensator (C_{S}) die Temperatur mit einem elektrischen Widerstandssensor (R_{meß}) gemessen wird und wobei mit dem Widerstandssensor (R_{meß}) gleichzeitig die Anordnung geheizt wird
**dadurch gekennzeichnet, dass**
eine Anordnung verwendet wird, bei der auf einer Trägerschicht eine Metallschicht als Interdigitalstruktur angebracht ist, die den Kondensator (C_{S}) bildet, wobei in dem Kondensator (C_{S}) ein temperaturabhängiger Widerstand integriert ist, der gleichzeitig als Temperatursensor und als Heizelement verwendet wird und bei der auf der Metallschicht außer einer Passivierungsschicht eine die Betauung fördernde Zusatzschicht angebracht ist,
so dass
bei der Abkühlung der Anordnung bereits einige Kelvin vor dem Erreichen des Taupunktes ein detektierbarer Wasserfilm gebildet wird, der an der Anordnung ein auswertbares Signal erzeugt.

2. Verfahren nach Anspruch 1, **dadurch gekennzeichnet, dass** als die die Betauting fördernde Zusatzschicht Kondensationskeirne verwendet werden.

## Claims

1. Method for detecting condensations at surfaces by analysing a change of a dielectric constant in a stray field of a condensator (CS), wherein the temperature is measured at the condensator (CS) using an electrical resistance sensor (Rmeß) and wherein at the same time the arrangement is heated by the resistance sensor (Rmeß), **characterised in that** an arrangement is used where a metal layer is arranged on a carrying layer as an interdigital structure forming the condensator (CS), wherein a temperature-dependent resistor is integrated into the condensator (CS), the resistor being used as a temperature sensor and a heating element at the same time, and wherein, in addition to a passivating layer, an extra layer is arranged on the metal layer, the extra layer supporting the condensation so that, when the arrangement is cooled down, a detectable water film is established yet a few Kelvin before reaching the dew point, the water film causing an analysable signal at the arrangement.

2. Method according to claim 1, **characterised in that** condensation nuclei are used as the extra layer supporting the condensation.

## Revendications

1. Procédé pour la détection de condensations sur des surfaces, par évaluation de variation de la constante diélectrique dans la zone de dispersion d'un condensateur (C_{S}), où la température est mesurée sur le condensateur (C_{S}) avec un senseur de résistance électrique (R_{meß}) et où le dispositif est simultanément chauffé avec le senseur de résistance (R_{meß}),
**caractérisé en ce qu'**
un dispositif est utilisé, où une couche métallique est appliquée sur une couche substrat, en tant que structure interdigitale formant le condensateur (C_{S}), une résistance dépendante de la température étant intégrée au condensateur (C_{S}), laquelle est simultanément utilisée comme capteur de température et comme élément chauffant, et une couche additionnelle favorisant la condensation étant appliquée sur la couche métallique, outre une couche de passivation,
de manière à former un film d'eau détectable au refroidissement du dispositif, avant même d'atteindre le point de condensation, à quelques degrés Kelvin de celui-ci, ledit film d'eau générant un signal évaluable sur le dispositif

2. Procédé selon la revendication 1, **caractérisé en ce que** des germes de condensation sont employés comme couche additionnelle favorisant la condensation.
